# EUROPEAN PATENT APPLICATION

(11) **EP 0 785 482 A2**
(43) Date of publication of application: **23.07.1997**
(21) Application number: 97300388.2
(22) Date of filing: 21.01.1997
(51) Int. Cl.: G03G 15/00, H04N 1/00

(54) **Image forming system**

(30) Priority: 22.01.1996 JP 8495/96
(71) Applicant: KABUSHIKI KAISHA TOSHIBA, Kawasaki-shi (JP)
(72) Inventor: Fujii, Tetsuya, 1-1 Shibaura 1-chome,Minato-ku Tokyo 105 (JP)
(74) Representative: Waldren, Robin Michael

(57) **Abstract**

It is an object of this invention to provide an image forming system capable of reliably receiving facsimile data without increasing the memory capacity. When a user sets an automatic transfer mode from a control panel 110, a transfer processing controller 206 transmits FAX data received by a FAX processor 201 to a mail separating/forming unit 204. The mail separating/forming unit 204 forms an electronic mail for transfer by adding the FAX data as an appended file to the mail. The transfer processing controller 206 controls an electronic mail processor 203 to transfer the transfer electronic mail to a mail server having a predetermined address on a LAN via a network communication unit 202. The transfer destination of the transfer electronic mail is a predetermined mail box previously set in the mail server.

## Description

The present invention relates to an image forming system including an image forming apparatus for outputting an image by using an electrostatic photographic process and a data storage device connected to the same network as the image forming apparatus and, more particularly, to an image forming apparatus including a facsimile function capable of transmitting an image through a communication line.

Recently, a digital composite copier (to be referred to as a DPPC hereinafter) has been put into practical use. This DPPC reads an image of an original and copies the read image and also has a facsimile function of transmitting the read image to, e.g., a facsimile apparatus arranged in a remote place through a communication line.

The DPPC can be driven singly or integrally as a printer for forming an image on a recording medium on the basis of image data supplied from an external apparatus such as a host computer or a wordprocessor or as a reader for reading an original image and outputting the image data to, e.g., an external facsimile apparatus or information storage device.

The DPPC includes an image reading section, a signal converting section, an image forming section, a paper supply/delivery section, and a system control section. The image reading section reads an original image and produces an electrical signal corresponding to the original image. The signal converting section converts the electrical signal produced by the image reading section into image data of a predetermined format. The image forming section copies the image on the basis of the image data of the read original image. The paper supply/delivery section supplies a sheet of paper as a recording medium onto which the image copied by the image forming section is to be output and delivers the sheet on which the image is output to the outside of the apparatus. The system control section controls the individual parts of the apparatus.

The image reading section has an original table for holding an original as an object to be read, an illuminating lamp for illuminating the original set on the original table, and a CCD sensor for converting reflected light from the original illuminated by the illuminating lamp into an electrical signal. The image reading section also has a memory for storing the electrical signal corresponding to the image of the original. The CCD applied to this image reading section is a line CCD sensor for reading an image only in a predetermined direction. In this line CCD sensor, the read pixel array extends in a predetermined direction, i.e., a main scan direction. The image reading section extracts an image of an original in the main scan direction as an electrical signal at a predetermined timing and optically scans the original in a direction perpendicular to the main scan direction, i.e., a subscan direction, thereby extracting the image of the original as an electrical signal in a predetermined order.

When the image of the original is to be copied by the image forming section, the signal converting section converts the electrical signal stored in the memory of the image reading section into bit-map data, i.e., a copy signal. When the image of the original is to be transmitted to the outside through a communication line, the signal converting section converts the electrical signal stored in the memory into parallel or serial coded data.

The image forming section has a photosensitive drum as an image carrier. The image forming section also includes a charging unit, a developing unit, a transfer unit, and a cleaning unit arranged in this order around the photosensitive drum in the direction of rotation of the photosensitive drum. An exposure unit for exposing the surface of the photosensitive drum is arranged between the developing unit and the charging unit of the image forming section. This image forming section also includes a fixing unit for fixing a toner image developed by the developing unit on a sheet of paper.

The charging unit has a charging wire for corona discharge. This charging wire is connected to a power supply and applied with a voltage of 4 to 8 kV, thereby charging the photosensitive drum to a surface potential of, e.g., -700 V.

The exposure unit exposes the surface of the photosensitive drum to a laser beam on the basis of the image data previously stored in the image memory or the image data converted by the signal converting section, thereby forming an electrostatic latent image on the charged photosensitive drum.

The developing unit is arranged to oppose a predetermined development position on the surface of the photosensitive drum. The developing unit contains a developing agent consisting of toner and carrier which triboelectrically charges the toner to a predetermined polarity and forms a magnetic brush. The developing unit includes a developing roller which supplies the developing agent to the electrostatic latent image formed on the photosensitive drum and forms a toner image by adhering only the toner to the electrostatic latent image. The developing roller consists of a nonmagnetic cylindrical outer circumferential portion which is so formed as to be rotatable and a magnet fixed to a predetermined position. The developing roller carries the developing agent to the development position and provides only the toner to the electrostatic latent image by constraining the carrier by a magnetic force.

The transfer unit is constituted by a corona discharging unit similar to the charging unit or a metal roller. This transfer unit electrostatically attracts and transfers the toner image, which is formed by the developing unit by developing the electrostatic latent image on the photosensitive drum, onto a sheet of paper supplied by the rotation of the photosensitive drum.

The fixing unit consists of a pair of rollers each incorporating a heater. This fixing unit heats the sheet and the toner with a predetermined pressure applied between the rollers, thereby melting the toner electrostatically adhered to the sheet and fixing the toner to the sheet.

The cleaning unit has a charge-removal lamp for irradiating light on the entire surface of the photosensitive drum and a cleaner for scraping off toner not transferred and remaining on the surface of the photosensitive drum. The cleaning unit erases the residual charge on the photosensitive drum and stabilizes the surface condition of the photosensitive drum for the next image forming operation.

The system control section controls the operation of the whole DPPC on the basis of various control signals input from a control panel. From the control panel it is possible to input numerical data such as the number of copies, the magnification, and the facsimile number of a partner of facsimile transmission, and control signals for selecting various operation modes by which the DPPC is used independently or simultaneously as a reader, a facsimile apparatus, and a printer and interrupting a read operation, a copy operation, or a transmission/reception operation.

To accomplish a memory receiving function capable of automatic facsimile reception while the DPPC is performing image formation as a printer, the DPPC has a memory capable of storing a predetermined amount of image data. Facsimile data stored in the memory by this memory receiving function is output to the image forming section after the image formation is completed. This facsimile data is output onto a sheet of paper by again operating the image forming section.

The DPPC of the above sort also has a function of storing received facsimile data of a plurality of cases, instead of immediately outputting the data, and simultaneously outputting the stored facsimile data at a later time in accordance the operation by a user.

Unfortunately, the memory capacity of the internal memory of the DPPC is small and so the memory can store facsimile data of only a few cases. If the image forming section of the DPPC is made unusable by a failure or an error such as lack of toner or sheets, automatic facsimile reception can be performed by the memory receiving function. Since the memory capacity is small, however, if recovery from the error or the failure is delayed the received data exceeds the allowable memory capacity to make automatic reception of facsimile data impossible.

In addition, memories with a large capacity are expensive. Therefore, if the capacity of the internal memory of the DPPC is increased, the apparatus itself becomes expensive.

It is an object of the present invention to provide an image forming system capable of reliably receiving facsimile data without increasing the memory capacity.

To achieve the above object, the present invention provides an image forming system comprising an external data storage device, an image forming apparatus, and connecting means for connecting the image forming apparatus and the data storage device so that image data can be transmitted and received between them,
wherein the image forming apparatus comprises
receiving means for receiving image data transmitted from an external apparatus,
storage means for storing the image data received by the receiving means,
image forming means for forming an image on a recording medium on the basis of the image data stored in the storage means, and
image data transfer means for transferring the image data received by the receiving means to the external data storage device via the connecting means in order to allow the external data storage device to store the image data, if the image data cannot be stored in the storage means.

In the image forming system of the present invention, if image data received by the receiving means of the image forming apparatus cannot be stored in the storage means, the image data transfer means transfers the image data to the external data storage device connected to the image forming apparatus via the connecting means.

Accordingly, even if the received data exceeds the allowable capacity and the storage means becomes unusable, image data can be reliably stored in the external data storage device. The image data stored in the external data storage device can be retrieved to the image forming apparatus at a predetermined timing after the storage means becomes usable. This allows the image forming means to form an image corresponding to the retrieved image data on a recording medium.

It is therefore possible to provide an image forming system capable of reliably storing image data without increasing the capacity of the storage means.

It is also possible to provide an inexpensive apparatus since the image forming apparatus incorporated into the image forming system does not require an expensive, large-capacity storage means.

This invention can be more fully understood from the following detailed description when taken in conjunction with the accompanying drawings, in which:
FIG. 1 is a block diagram schematically showing a control system of an image forming apparatus included in an image forming system of the present invention;
FIG. 2 is a sectional view schematically showing the internal structure of the image forming apparatus. shown in FIG. 1;
FIG. 3 is a plan view schematically showing a portion of a control panel of the image forming apparatus shown in FIG. 1;
FIG. 4 is a view showing the state in which the image forming apparatus shown in FIG. 1 is connected to a general public line and a LAN;
FIG. 5 is a block diagram for explaining details of a communication controller of the image forming apparatus shown in FIG. 1; and
FIG. 6 is a flow chart showing processing steps in an automatic FAX transfer mode.

An embodiment of an image forming system of the present invention will be described in detail below with reference to the accompanying drawings.

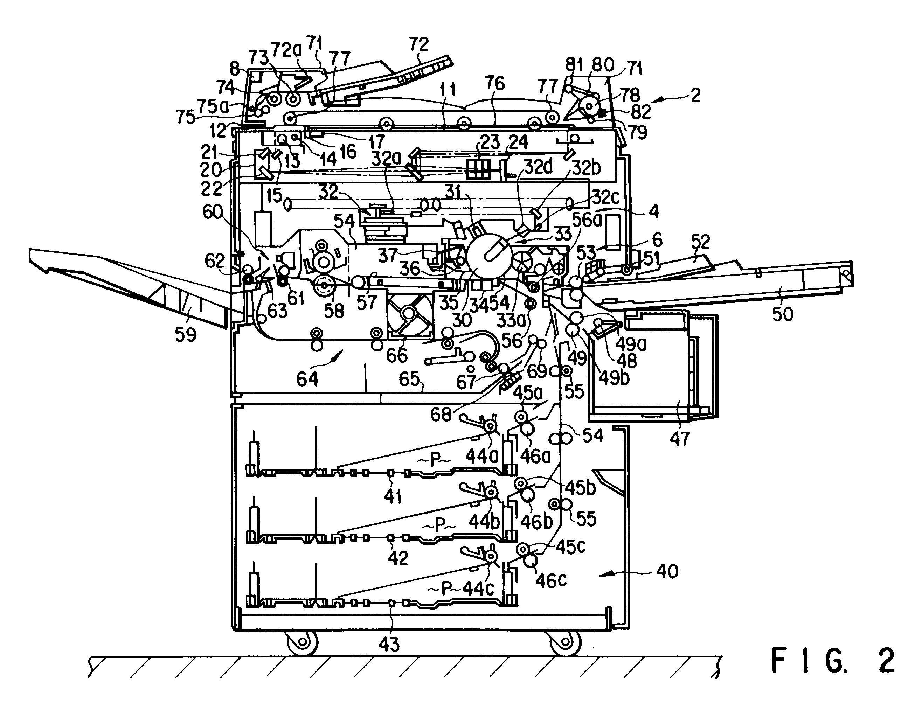

As shown in FIG. 2, an image forming apparatus included in the image forming system of the present invention has, e.g., an electrophotographic digital copier 2 (to be referred to as a DPPC hereinafter), an image reading section 4, and an image forming section 6. The DPPC 2 includes an automatic document feeder 8 arranged on the image reading section 4 and so formed as to be openable with respect to an original table (to be described later) of the image reading section 4. This automatic document feeder 8 feeds originals D, as the objects to be read, one by one to the original table and also functions as an original cover by which the original D placed on the original table is brought into tight contact with the original table.

The image reading section 4 has an original table 11 and an original scale 12 in its upper portion. The original table 11 is made of transparent glass which is opposed to the automatic document feeder 8 in a closed state and on which the original D is set. The original scale 12 is arranged on one end of the original table 11 to indicate a position at which the original D is to be set on the original table 11.

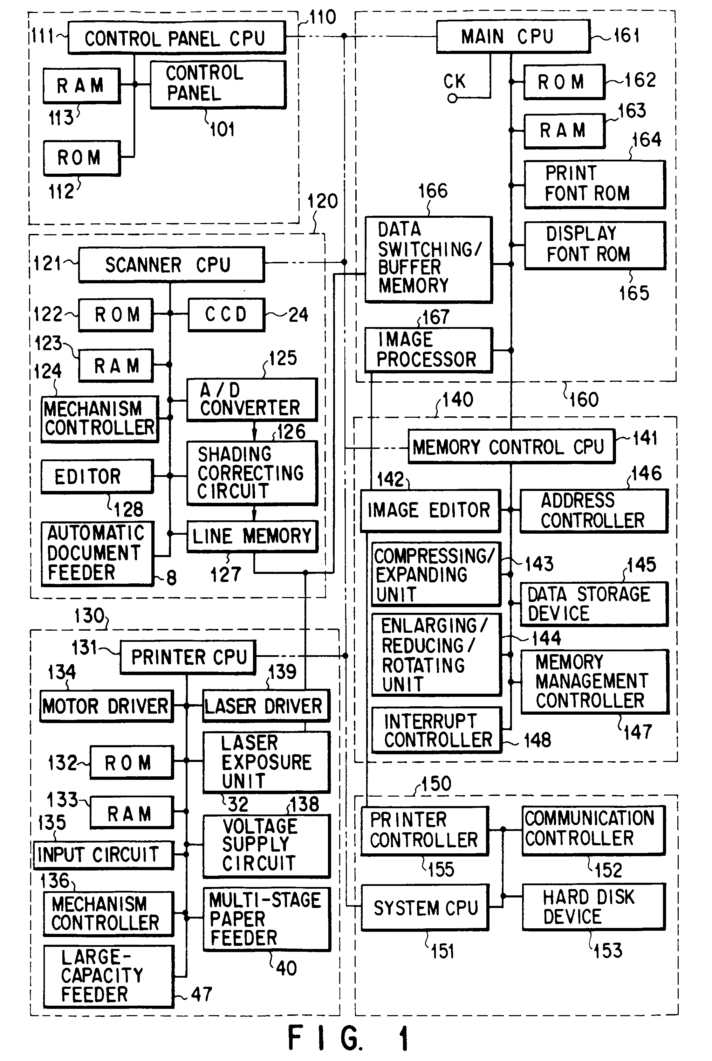

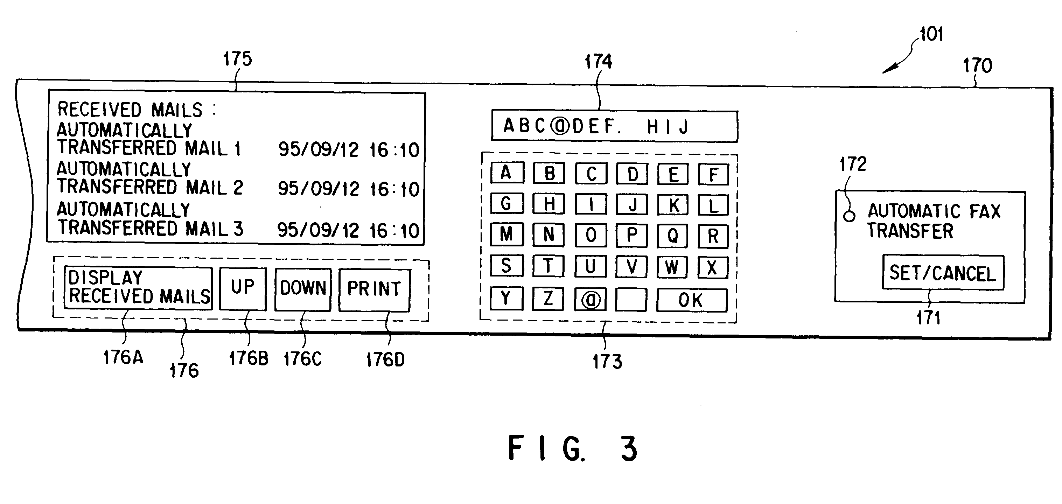

As shown in FIG. 1, a control panel 101 is provided near the original table 11. This control panel 101 has, e.g., a print key for instructing the start of a copying operation of the DPPC 2, a ten-key board for inputting numerical data such as the number of copies and the magnification, and keys for inputting a control signal for selecting the paper size. As shown in FIG. 3, the control panel 101 also has a facsimile operation unit 170 for executing a facsimile transmitting/receiving function. This facsimile operation unit 170 has, e.g., an automatic transfer button 171 for setting/canceling an automatic facsimile transfer function (to be described later).

Parts arranged below the original table 11 are an exposure lamp 13 for illuminating the original D placed on the original table 11, an auxiliary reflecting plate 14 for guiding the light beam from the exposure lamp 13 onto the original D, and a first mirror 15 for bending the reflected beam from the original D to the left in FIG. 2. The exposure lamp 13, the auxiliary reflecting plate 14, and the first mirror 15 are fixed to a first carriage 16 and moved parallel to the original table 11 by the movement of the first carriage 16. Note that the first carriage 16 is moved parallel to the original table 11 when a driving force is transmitted from a pulse motor (not shown) via, e.g., a toothed belt (not shown).

A second carriage 20 is disposed to the left of the original table 11 in FIG. 2, i.e., in a direction along which the beam reflected by the first mirror 15 is guided.

On the second carriage 20, a second mirror 21 and a third mirror 22 are arranged at right angles to each other. The second mirror 21 bends the beam reflected from the original D and guided by the first mirror 15 downward. The third mirror 22 bends the beam to the right in FIG. 2. The second carriage 20 is driven together with the first carriage 16 by the toothed belt (not shown) for driving the first carriage 16 and moved parallel to the original table 11 at a speed half that of the first carriage 16.

In a plane below the first carriage 16 and including the optical axis of the beam returned by the second carriage 20, an image forming lens 23 and a CCD image sensor 24 are arranged. The image forming lens 23 forms an image of the reflected beam from the second carriage 20 at a predetermined magnification. The CCD image sensor 24 converts the reflected beam converged by the image forming lens 23 into an electrical signal, i.e., image data.

The image forming section 6 has a photosensitive drum 30 rotatable positioned in substantially the center of the DPPC 2. The photosensitive drum 30 is rotated at a predetermined rotating speed by a motor (not shown).

A charger 31, a laser exposure unit 32, a developing unit 33, a transfer separation charger 34, a separation claw 35, a cleaning unit 36, and a charge removal unit 37 are arranged in this order in predetermined positions around the photosensitive drum 30. The charger 31 charges the drum surface to a predetermined charge. The laser exposure unit 32 forms an electrostatic latent image on the surface of the photosensitive drum 30. The developing unit 33 develops the electrostatic latent image with a developing agent including toner and forms a toner image. The transfer·separation charger 34 transfers the toner image formed on the photosensitive drum 30 onto a copy sheet P as a recording medium supplied from a paper cassette (to be described later) and separates the sheet P, on which the toner image is transferred, from the photosensitive drum 30. The separation claw 35 separates the copy sheet P from the surface of the photosensitive drum 30. The cleaning unit 36 removes the toner remaining on the surface of the photosensitive drum 30. The charge removal unit 37 removes the potential remaining on the surface of the photosensitive drum 30.

The laser exposure unit 32 has a semiconductor laser device for generating a laser beam which is modulated on the basis of image data, an optical deflector for deflecting the laser beam, and an image forming optical system for forming an image of the deflected laser beam on the photosensitive drum 30. This laser exposure unit 32 irradiates the laser beam generated by the semiconductor laser device onto the surface of the photosensitive drum 30 along the axial direction of the photosensitive drum 30, thereby forming an electrostatic latent image on the surface of the photosensitive drum 30.

The developing unit 33 has a developing agent consisting of toner and carrier which triboelectrically charges the toner to a predetermined polarity and forms a magnetic brush. The developing unit 33 also has a developing roller 33a which supplies the developing agent onto the surface of the photosensitive drum 30 and adheres the toner to the electrostatic latent image, thereby developing the image with a desired image density.

A multi-stage paper feeder 40 is arranged on the bottom of the DPPC 2 positioned below the photosensitive drum 30. The feeder 40 has a plurality of vertically arranged cassette stages which are detachably inserted from the front of the DPPC 2.

The multi-stage paper feeder 40 includes an upper cassette 41, a middle cassette 42, and a lower cassette 43 for storing a plurality of types of copy sheets P. For example, these cassettes 41, 42, and 43 are so formed as to be capable of storing about 500 A4-size copy sheets, about 500 B4-size copy sheets, and about 500 A3-size copy sheets, respectively, which are so arranged as to be conveyed in the longitudinal direction.

Pickup rollers 44a, 44b, and 44c for picking up the sheet P one by one from the upper, middle, and lower cassettes 41, 42, and 43 are arranged in predetermined positions of the cassettes 41, 42, and 43, respectively.

At positions where the leading edges of the sheet P picked up from the cassettes 41, 42, and 43 by the pickup rollers 44a, 44b, and 44c pass, conveyor rollers 45a, 45b, and 45c for separating the sheets P from each other and separation rollers 46a, 46b, and 46c arranged integrally with these conveyor rollers are arranged. The separation rollers 46a, 46b, and 46c are so arranged that their axes are parallel to their respective corresponding conveyor rollers and they are brought into contact with these conveyor rollers by a predetermined pressure. Each separation roller is rotated in a direction opposite to the direction of rotation of the opposing conveyor roller and feeds only the uppermost one of the sheets P picked up from the corresponding cassette to a conveyance path (to be described later).

A large-capacity feeder 47 capable of storing about 3000 sheets of a frequently used size, e.g., A4-size sheets P, is provided to the right of the multi-stage paper feeder 40 in FIG. 2. A pickup roller 48 for picking up the sheets P stored in the large-capacity feeder 47 one by one is arranged in a predetermined position of the large-capacity feeder 47. A separation mechanism 49 including a conveyor roller 49a and a separation roller 49b vertically paired with each other is arranged between the pickup roller 48 and the photosensitive drum 30. The separation mechanism 49 rotates the separation roller 49b in a direction opposite to a direction in which the conveyor roller 49a is rotated and feeds only the uppermost one of the sheets P picked up from the large-capacity feeder 47 to the conveyance path (to be described later).

A manual feeder 50 capable of feeding the copy sheets P is arranged above the large-capacity feeder 47 independently of the cassettes 41, 42, and 43 and the large-capacity feeder 47.

A manual pickup roller 51, a manual guide 52, and a conveyor roller 53 are arranged between the manual feeder 50 and the photosensitive drum 30. The manual pickup roller 51 picks up a sheet P inserted into the manual feeder 50. The manual guide 52 guides the sheet P picked up by the pickup roller 51. The conveyor roller 53 conveys the sheet P which is guided to the photosensitive drum 30 by the manual guide 52.

A conveyance path 54 for guiding the sheets P from the cassettes 41, 42, and 43 and the large-capacity feeder 47 to the photosensitive drum 30 is formed from the cassettes 41, 42, and 43 and the large-capacity feeder 47 to the photosensitive drum 30. This conveyance path 54 is further extended to the outside of the DPPC 2 through a transfer region defined between the photosensitive drum 30 and the transfer·separation charger 33. A plurality of conveyor rollers 55 are provided in the conveyance path 54 to convey the sheet P fed from any of the cassettes, the large-capacity feeder, and the manual guide to the photosensitive drum 30.

An aligning roller 56 is disposed in a portion of the conveyance path 54 near and upstream of the photosensitive drum 30. This aligning roller 56 corrects any skew of the copy sheet P guided in the conveyance path 54. The aligning roller 56 also aligns the leading edge of a toner image on the photosensitive drum 30 with the leading edge of the copy sheet P and feeds the copy sheet P to the transfer region at the same speed as the moving speed of the circumferential surface of the photosensitive drum 30. An aligning sensor 56a for sensing the arrival of the copy sheet P to the aligning roller 56 is provided before the aligning roller 56, i.e., on the side of the conveyor rollers 55.

A conveyor belt 57 for conveying the sheet P is incorporated in a direction along which the sheet P passed through the transfer region proceeds. A fixing unit 58 including a pair of heat rollers whose roller surfaces are urged against each other is provided at a position, along the direction in which the sheet P is conveyed by the conveyor belt 57, where the photosensitive drum 30 is not exposed to the heat generated by the unit 58. The fixing unit 58 melts a toner image by heating the sheet P on which the toner image is transferred and at the same time pressurizes the toner image and the sheet P, thereby fixing the toner image to the sheet P.

A paper delivery tray 59 to which the sheet P having the fixed toner image is delivered is arranged on the side wall of the DPPC 2 opposite to the fixing unit 58.

A paper delivery switching unit 60 for guiding the copy sheet P on which the toner image is fixed by the fixing unit 58 to one of a sheet turn-over section or the paper delivery tray 59 is arranged between the fixing unit 58 and the paper delivery tray 59.

The paper delivery switching unit 60 has first and second paper delivery rollers 61 and 62 and a selector gate 63. The rollers 61 and 62 advance the sheet P passed through the fixing unit 58. The selector gate 63 is arranged between the first and second paper delivery rollers 61 and 62 and selectively supplies the copy sheet P passed through the fixing unit 58 to the paper delivery tray 59 or the sheet turn-over section (to be described later).

A turn-over mechanism 64 has a temporary stocker 65, a turn-over path 66, a pickup roller 67, a conveyance path 68, and a paper feed roller 69. The temporary stocker 65 temporarily stocks the copy sheets P already passed through the transfer region and the fixing unit 58. The turn-over path 66 turns over the copy sheet P passed through the fixing unit 58 and guides the sheet P to the temporary stocker 65. The pickup roller 67 picks up the copy sheets P stocked in the temporary stocker one after another. The conveyance path 68 again guides the sheets P stocked in the temporary stocker 65 to the aligning roller 56. The paper feed roller 69 feeds the sheets P guided by the conveyance path 68 to the aligning roller 56.

The automatic document feeder 8 has a cover 71 whose rear end portion is attached to the rear end portion of the upper surface of the DPPC 2 via hinges (not shown). As already described earlier, the cover can be opened, where necessary, with respect to the original table 11 of the image reading section 4 by pivoting the whole automatic document feeder 8.

An original feed table 72 for holding a plurality of originals D is provided in a slightly left portion on the upper surface of the cover 71. A pickup roller 73 is arranged to the left of the original feed table 72 in FIG. 2, i.e., in one end portion of the automatic document feeder 8. The pickup roller 73 picks up the originals set on the original feed table 72 one by one and supplies the originals from the left end in FIG. 2 to one end of the original table 11 of the image reading section 4.

An empty sensor 73 is disposed in a predetermined position of the original feed table 72. This empty sensor is an original sensor for sensing whether the original D is set on the original feed table 72. Note that an original width sensor (not shown) which functions in the same manner as an original position sensor 17 for sensing the set position of the original D on the original table 11 can also be arranged on the original feed table 72.

A paper feed roller 74 and an aligning roller 75 are arranged in the original pickup direction of the pickup roller 73. The paper feed roller 74 feeds the original D picked up by the pickup roller 73 to the original table 11. The aligning roller 75 aligns the leading edge of the original D fed by the paper feed roller 74.

An aligning sensor 75a for sensing the arrival of the original D to the aligning roller 75 is arranged between the aligning roller 75 and the paper feed roller 74.

A conveyor belt 76 is arranged in a position inside the cover 71 where the conveyor belt 76 opposes the original table 11 of the image reading section 4 when the automatic document feeder 8 is closed. This conveyor belt 76 is given dimensions which cover almost the whole original table 11 and conveys the original D, which is conveyed from the original feed table 72 by the pickup roller 73, the paper feed roller 74, and the aligning roller 75, to a predetermined position on the original table 11. The conveyor belt 76 is looped between a pair of right and left belt rollers 77 shown in FIG. 2 and rotated in both ways, i.e., to the right and left in FIG. 2, by a belt driving mechanism (not shown).

On the right side of the automatic document feeder 8, a turn-over roller 78, a pinch roller 79, a flapper 80, a paper delivery roller 81, and a jam sensor 82 are arranged. The turn-over roller 78 feeds the original D, which is moved from the left to the right in FIG. 2 by the conveyor belt 76, to the outside of the cover 71. The pinch roller 79 pushes the original D against the turn-over roller 78. The flapper 80 performs switching between an operation by which the original D conveyed by the turn-over roller 78 and the pinch roller 79 is returned to the conveyor belt 76 and an operation by which the original D is delivered to a predetermined delivery position, i.e., the cover 71. When the flapper 80 is switched to the delivery side, the paper delivery roller 81 delivers the original D conveyed by the turn-over roller 78. The jam sensor 82 senses a jam of an original in the vicinity of the turn-over roller 78.

FIG. 1 is a block diagram schematically showing a control mechanism of the DPPC 2 shown in FIG. 2.

The DPPC 2 is roughly divided into a control panel block 110, a scanner block 120, a printer block 130, a memory edit block 140, a system block 150, and a main control block 160.

The control panel block 110 has a control panel 101 used to instruct the start of a copying operation of the DPPC 2, input numerical data such as the number of copies and the magnification, and input a control signal for selecting the paper size. The control panel block 110 also has a control panel CPU 111 which detects inputs from various switches (not shown) and a touch panel (not shown) of the control panel 101, displays data on the touch panel, and controls the ON and OFF of LEDs (not shown). This control panel CPU 111 is connected to a read-only memory (to be referred to as a ROM hereinafter) 112 and a random access memory (to be referred to as a RAM hereinafter) 113. The control panel block 110 detects inputs from the various switches and the touch panel, displays data on the touch panel, and controls the ON and OFF of the LEDs, and is in this way used to exchange control data with the user.

On the basis of the data stored in the ROM 112 and the RAM 113, the control panel CPU 111 detects inputs from the input keys and the touch panel on the control panel 101, displays data on the touch panel, and controls the ON/OFF of LEDs.

The scanner block 120 has a scanner CPU 121 and a ROM 122 and a RAM 123 connected to the scanner CPU 121. On the basis of control data stored in the ROM 122 and the RAM 123, the scanner CPU 121 operates the CCD image sensor 24 of the image reading section 4 to input an image of the original D as the brightness information of a beam. Also, to move the first and second carriages 16 and 20 of the image reading section at predetermined speeds, the scanner CPU 121 outputs a predetermined driving signal to a mechanism controller 124 for biasing a pulse motor (not shown).

In addition, the scanner block 120 has an A/D converter 125, a shading correcting circuit 126, and a line memory 127. The A/D converter 125 converts output analog image data photoelectrically converted by the CCD image sensor 24 into a digital signal by well-known A/D conversion. On the basis of the image signal converted into a digital signal by the A/D converter 125, the shading correcting circuit 126 removes output errors of the individual elements constituting the CCD image sensor 24 and an influence such as the nonuniformity of the quantity of light from the illuminating lamp 13. The line memory 127 supplies the image information of the original D read by the CCD image sensor 24 to the memory edit block 140 (to be described later) at a predetermined timing. On the basis of the data in the ROM 122 and the RAM 123, the scanner CPU 121 converts the image information of the original D read by the CCD image sensor 24 into an electrical signal. The scanner CPU 121 then binarizes the image data by a predetermined threshold level and outputs the data to a data storage device of the memory edit block 140.

The scanner CPU 121 is also connected to the automatic document feeder 8. The automatic document feeder 8 feeds the original D under the control of the scanner CPU 121 which is controlled by the main control block 160 (to be described later). Additionally, the scanner CPU 121 is connected to an editor 128. When edit data is input from a coordinate input device (not shown), the editor 128 outputs predetermined control data to the data storage device of the memory edit block 140 and controls the size of a memory area for holding image data used in image formation.

The printer block 130 has a printer CPU 131 and a ROM 132 and a RAM 133 connected to the printer CPU 131. This printer block 130 forms an image on the sheet P on the basis of image data supplied by the image reading section 4, i.e., the scanner block 120, and image data supplied from an external device (to be described later).

The printer CPU 131 is connected to a motor driver 134 for driving the photosensitive drum 30, the developing roller 33a of the developing unit 33, the aligning rollers, the conveyor belts, the fixing unit, the turn-over mechanism, and the pickup rollers, the conveyor rollers, and the separation rollers arranged in the cassettes 41, 42, and 43 of the multi-stage paper feeder 40 and the large-capacity feeder 47. The printer CPU 131 is also connected to an input circuit 135 used to input output signals from various switches and sensors. The input signals to the input circuit 135 are output from switches and sensors such as the original position sensor 17 for sensing the position of the original D set on the original table 11, paper empty switches (not shown) arranged in the cassettes 41, 42, and 43 and the large-capacity feeder 47, lever switches arranged in predetermined positions of the conveyance path 54 and the turn-over mechanism 64 to sense a jam of the sheet P, and the aligning switch 56a. Additionally, the printer CPU 131 is connected to a mechanism controller 136 for biasing solenoids (not shown) incorporated into the selector gate 63 of the paper delivery switching unit 60 and the cleaning unit 35.

Furthermore, the printer CPU 131 is connected to a temperature control circuit 137, a voltage supply circuit 138, and a laser driver 139. The temperature control circuit 137 controls the temperature of the fixing unit 58. The voltage supply circuit 138 supplies predetermined voltages to the charger, the developing unit, and the transfer·separation charger. The laser driver 139 modulates the light intensity of an exit laser beam from a laser diode (not shown) of the laser exposure unit 32 in accordance with image data supplied from the data storage device (to be described later). The printer CPU 131 forms an image on the sheet P by controlling the image forming section on the basis of the data in the ROM 132 and the RAM 133.

The memory edit block 140 has a memory control CPU 141. This memory edit block 140 converts image data, which is supplied from the scanner block 120 or an external device in accordance with instructions from a main CPU (to be described later) of the main control block 160 and a system CPU (to be described later) of the system block 150, into bit-map data used to modulate the intensity of the exit laser beam from the laser diode of the laser exposure unit 32. The memory edit block 140 temporarily stores the data in the data storage device.

The memory control CPU 141 is connected to an image editor 142, a compressing/expanding unit 143, an enlarging/reducing/rotating unit 144, and a data storage device 145. The image editor 142 edits image data supplied from an external device via the system block 150 and image data of the original D which is read by the scanner block 120 and converted into a predetermined format by an image processor (to be described later) of the main control block 160. The compressing/expanding unit 143 compresses or expands the input image data. The enlarging/reducing/ rotating unit 144 enlarges, reduces, or rotates the input image data. The data storage device 145 stores, in units of pages, the image data which is processed by the image editor 142, the compressing/ expanding unit 143, and the enlarging/reducing/rotating unit 145. The memory control CPU 141 is also connected to an address controller 146, a memory management controller 147, and an interrupt controller 148. The address controller 146 manages memory addresses. The memory management controller 147 manages the data in the data storage device 145 and the capacity of the data storage device 145. The interrupt controller 148 gives instructions for processing steps such as compression/expansion and enlargement/reduction/ rotation with respect to the input image data to the image editor 142.

The system block 150 has a system CPU 151 for controlling input of image data supplied from devices other than the scanner block 120. The system CPU 151 is connected to a communication controller 152, a hard disk device 153 as an external device, and a printer controller 155. The printer controller 155 converts image data such as code data supplied via the communication controller 152 and the hard disk device 153 into image data of a format which can be processed by the DPPC 2. The system block 150 inputs image data supplied from an external device other than the scanner section 120 to the image editor 142 of the memory edit block 140.

The communication controller 152 is connected to a general public line. This communication controller 152 can receive facsimile data transmitted from the outside through the general public line and transmit image data read by the scanner block 120 to the outside as facsimile data. The communication controller 152 is connected to a LAN (Local Area Network) to which computers (not shown) and wordprocessors (not shown) are connected. As will be described later, an electronic mail system is constructed on this LAN. That is, this DPPC 2 is connected to external apparatuses such as computers and wordprocessors via the network and functions as a printer apparatus which outputs image data supplied from these external apparatuses on sheets. The communication controller 152 can receive data transmitted by this electronic mail system and transmit data stored in the data storage device 145 of the memory edit block 140 to a mail server on the electronic mail system.

The main control block 160 has a main CPU 161 for controlling the operation of the DPPC 2, i.e., controlling the CPUs 111, 121, 131, 141, and 151 of the control panel block 110, the scanner block 120, the printer block 130, the memory edit block 140, and the system block 150. This main control block 160 controls exchange of signals between the control panel block 110, the scanner block 120, the printer block 130, the memory edit block 140, and the system block 150.

The main CPU 161 is connected to a ROM 162 and a RAM 163. The ROM 162 stores initial data for operating the DPPC 2. The RAM 163 stores various data supplied from the control panel block 110, the scanner block 120, the printer block 130, the memory edit block 140, and the system block 150 under the control of the CPUs 121, 131, 141, and 151.

The main CPU 161 is also connected to a print font ROM 164 and a display font ROM 165. The print font ROM 164 stores a printer font used to store code data input via the system block 150 into the data storage device 145 of the memory editor 140. The display font ROM 165 stores a display font used to allow an edit display (not shown) to display an image corresponding to the code data input via the system block 150 and allow a liquid crystal display or an input panel of the control panel block 110 to display a predetermined image.

Furthermore, the main CPU 161 is connected to a data switching/buffer memory 166 and an image processor 167. The data switching/buffer memory 166 is used to specify the destination of image data read by the scanner block 120 and switch image data to be supplied to the printer block 130. The memory 166 also functions as a buffer memory for image data transferred between the line memory 127 of the scanner block 120 and the data storage device 145 of the memory edit block 140 and image data transferred between the data storage device 145 and the laser exposure unit 32. The image processor 167 masks or trims the input image data.

An original image copying operation done by the DPPC 2 shown in FIGS. 1 to 3 will be described below.

When a main switch (not shown) is turned on, the DPPC 2 is warmed up and initialized in accordance with the control program stored in the ROM 162. Also, in accordance with an instruction supplied from the scanner CPU 121 of the scanner 120 under the control of the main CPU 161, the automatic document feeder 8 is initialized on the basis of the control program stored in an ADFROM (not shown) of the automatic document feeder 8.

Originals D to be copied are set on the original tray 72 of the automatic document feeder 8. When a print key (not shown) of the control panel is turned on, an ADFCPU checks whether the empty sensor 73 of the automatic document feeder 8 is ON.

When the empty sensor 73 senses that the originals D are set on the original tray 72, a motor driver (not shown) supplies a driving current to drive the pickup roller 73. Consequently, the lowermost one of the originals D set on the original tray 72 is guided to the paper feed roller 74.

The original D guided by the paper feed roller 74 is further conveyed toward the aligning roller 75.

Subsequently, when the leading edge of the original D passes by the aligning sensor 75a, a clutch (not shown) is turned on by an ADF mechanism controller (not shown) and stops the aligning roller 75. Accordingly, the original D picked up from the original tray 72 by the pickup roller 73 is temporarily stopped, and any skew of the original D in the original conveyance direction is corrected. Thereafter, the belt rollers 77 are rotated in a first direction, i.e., an original feed direction by a driving motor (not shown), thereby rotating the conveyor belt 76. At a predetermined timing after that, the clutch (not shown) is turned off to allow the aligning roller 75 to feed the original D to the conveyor belt 76.

Then, the original D is conveyed onto the original table 11 of the DPPC 2 by rotating the conveyor belt 76 for a predetermined time by the conveyor motor. Note that when a predetermined time elapses after the trailing edge of the original D passes by the aligning sensor 75a, i.e., when a time predetermined by the interval between the aligning sensor 75a and the original scale 12 elapses, the rotation of the conveyor belt 76 is stopped and a rotation caused by inertia is prevented by a brake (not shown).

At the time the aligning sensor 75a senses the leading edge of the original D, the ADFCPU informs the scanner CPU 121 of the scanner block 120 of the DPPC 2 that the original D is conveyed to a predetermined position. On the basis of the dimensions of the original D detected by the automatic document feeder 8 and the magnification set by the control panel (not shown), the main CPU 161 selects a cassette containing sheets P having an optimum size.

In accordance with the input magnification, an image data read start position at which image data is input from the CCD line sensor 24 to the line memory 127 is read out from the ROM 162 and stored in the RAM 163.

Next, the illuminating lamp 13 of the first carriage 16 is turned on with a predetermined brightness, and the first carriage 16 is moved at a predetermined speed along the original D on the original table 11 by the rotation of a pulse motor (not shown). An image of the original D placed on the original table 11 is illuminated in the form of a band with a width of, e.g., 8 to 15 [mm] by the illuminating light from the exposure lamp 13 and the reflecting plate 14 on the first carriage 16. Note that the position at which the illuminating lamp 13 of the first carriage 16 is turned on is immediately below the original scale 12 shown in FIG. 2. At the time the quantity of the exit illuminating light from the illuminating lamp 13 becomes stable, reflected beams obtained by illuminating a black reference portion 12b and a white reference portion 12w formed on the surface of the original scale 12 opposite to the illuminating lamp are used in shading correction.

The reflected beam from the original D is sequentially reflected by the first mirror 15 of the first carriage 16 and the second and third mirrors 21 and 22 of the second carriage 20 and guided to the image forming lens 23.

The reflected beam from the original D guided to the image forming lens 23 is guided parallel to the optical axis, and the image is formed on the reading surface of the CCD line sensor 24.

The reflected beam from the original D, which corresponds to the image of the original D formed on the CCD line sensor 24, is photoelectrically converted by the CCD line sensor 24 and output in accordance with a predetermined rule.

The output signal from the CCD line sensor 24 is input in sequence from a pixel at a predetermined position (not shown) of the CCD line sensor 24 corresponding to the read start position stored in the RAM 163. The input signal is binarized by the A/D converter 25, the threshold level of the binary signal is corrected by the shading correcting circuit 126, and the signal is output to the line memory 127.

The input image data to the line memory 127 is transferred to the image processor 167 via the data switching/buffer memory 166, subjected to predetermined processing such as contour correction, and output to the data storage device 145. The input image data to the data storage device 145 is converted into a laser driving signal, i.e., a print signal by a parallel-serial converter (not shown) and supplied to the laser exposure unit 32.

At the same time the scanner block 120 reads the original image or at a predetermined timing, a motor (not shown) is biased by a motor driving voltage supplied from the motor driver 134 under the control of the main CPU 161. Consequently, the photosensitive drum 30 is rotated at a desired speed.

Simultaneously, the surface of the photosensitive drum 30 is charged to a predetermined potential by the charger 31 under the control of the voltage supply circuit 138. As an example, the initial surface potential of the photosensitive drum 30 is set at approximately -650 V.

Subsequently, the laser exposure unit 32 irradiates onto the surface of the photosensitive drum 30 a laser beam which is modulated in accordance with the image data corresponding to the image of the original D, i.e., the print signal stored in the data storage device 145 and converted by the parallel-serial converter (not shown). As already described above, the exit timing, i.e., the write start position of the exit laser beam from the laser exposure unit 32 is delayed a predetermined number of clocks in the main scan direction from a horizontal sync signal (not shown) on the basis of the write position stored in the RAM 163 in accordance with the size of the sheet P.

Consequently, an electrostatic latent image corresponding to the image data is formed on the surface of the photosensitive drum 30 on the basis of the print signal. The electrostatic latent image thus formed is developed with toner supplied from the developing roller 33a of the developing unit 33 which is applied with a development bias voltage of -450 V. Subsequently, the developed image is transferred as a toner image onto the sheet P by a transfer output from the transfer·separation charger 34 which is applied with a predetermined transfer voltage by the voltage supply circuit 138. The sheet P to which the toner image is to be transferred is supplied from a cassette selected by the main CPU 161 and conveyed to the photosensitive drum 30 at a timing at which the leading edge of the toner image and the leading edge of the sheet P are aligned by the aligning roller 56.

The toner image transferred to the sheet P is separated together with the sheet P from the surface of the photosensitive drum 30 by a separation output from the transfer·separation charger 34, which is applied with a predetermined separation voltage by the voltage supply circuit 138, and by the separation claw 35. The sheet P on which the toner image is transferred is then conveyed to the fixing unit 58 by the conveyor belt 57. The toner image is fixed to the sheet P by the fixing unit 58.

The sheet P on which the toner image is fixed is delivered to the paper delivery tray 59 arranged outside the DPPC 2 by the first and second paper delivery rollers 61 and 62.

The photosensitive drum 30 from which the toner image is transferred to the sheet P is successively rotated, and the residual toner is removed by the cleaning unit 36. The photosensitive drum 30 is then charge-removed by the change removal unit 37 and used in the next image formation.

Meanwhile, at the time the reading of the first original D placed on the original table 11 is completed, the ADFCPU is requested to feed the next original D, i.e., switch the originals D, by an instruction supplied from the scanner CPU 121 under the control of the main CPU 161, and the conveyor belt 76 is rotated.

Consequently, the first original currently set on the original table 11 is conveyed to the turn-over roller 78 and delivered to the original receiving region formed in a predetermined position of the cover 71 by the flapper 80 and the paper delivery roller 81.

Finally, the empty sensor 73 checks whether the subsequent original D is present. If an original D remains, the original feed operation is repeated. That is, as in the case of the first original, the second original is set on the original table 11 and an image of the second original is read.

As described above, a series of image forming operations are repeatedly performed for all the originals D set on the original tray 72 of the automatic document feeder 8.

Facsimile (to be referred to as FAX hereinafter) transfer processing performed by the communication controller 152 will be described below.

As already described earlier with reference to FIG. 3, the control panel 101 has a facsimile operation unit 170. This facsimile operation unit 170 has an automatic transfer button 171 and a lamp 172. The automatic transfer button 171 is used to specify set/cancel of an automatic transfer mode in which, when a FAX is received, the received FAX data is automatically transferred to an external apparatus other than the DPPC. The lamp 172 is turned on when this automatic transfer mode is set.

The facsimile operation unit 170 also has a keyboard 173, an address display 174, a mail display 175, and a mail operation unit 176. The keyboard 173 is used to input the mail address of the destination of automatic transfer in order to automatically transfer a FAX as an electronic mail to an external mail server. The address display 174 displays the input mail address of the transfer destination. The mail display 175 displays information of received mails stored in the mail server as the transfer destination. The mail operation unit 176 searches the contents displayed on the mail display 175 and instructs the mail server to output the stored FAX data. The mail operation unit 176 has a received mail display button 176A for causing the mail display 175 to display electronic mails received by the mail server, search buttons 176B and 176C for searching the received mails displayed on the mail display 175, and a print button 176D for designating printing of the received mails.

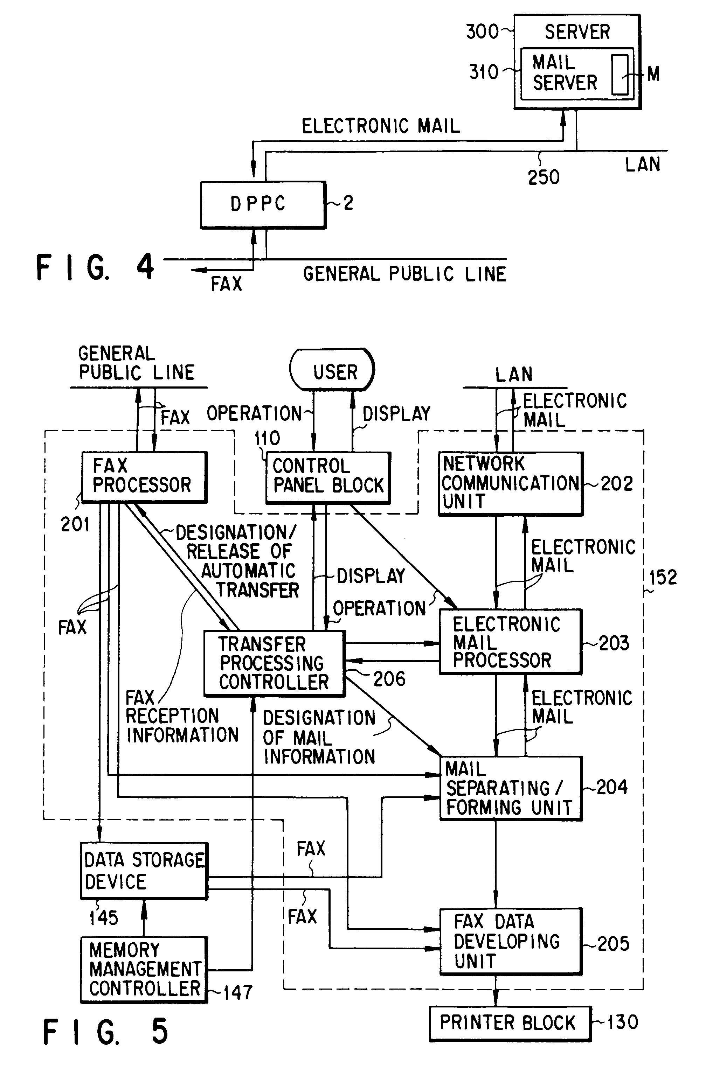

As shown in FIG. 4, the DPPC 2 is connected to an external general public line via the communication controller 152 and functions as a facsimile apparatus for transmitting and receiving FAX data. That is, FAX data received via the general public line can be output by the printer block 130. Also, image data read by the scanner block 120 can be transmitted via the general public line.

The communication controller 152 of the DPPC 2 is connected to a network 250 on which a LAN is constructed. A server 300 for controlling systems of the LAN is connected to this network 250. The server 300 manages various external apparatuses such as computers and wordprocessors connected to the network 250.

Also, an electronic mail system is constructed on the LAN. The server 300 has a function as a mail server 310 for managing transmission/reception of electronic mails. This mail server 310 has a memory M with a large capacity capable of setting mail boxes assigned to the various apparatuses connected to the LAN. It is of course possible to set a mail box for the DPPC 2 which is connected to the LAN.

Accordingly, when the user operates the facsimile operation unit 170, the DPPC 2 can search and retrieve, i.e., receive electronic mails stored in the mail box for the DPPC via the communication controller 152. That is, the DPPC 2 can access the DPPC mail box in the mail server 310 and receive electronic mails transmitted from external apparatuses on the LAN to the DPPC mail box. Also, another external apparatus such as a printer connected to the LAN can naturally access the DPPC mail box and receive electronic mails transmitted to the DPPC. The received electronic mails can be output by the printer block 130 of the DPPC 2.

The communication controller 152 can convert bit-map data stored in the data storage device 145 of the memory edit block 140 into the form of an electronic mail, transmit the data as an electronic mail to the mail server 310 on the LAN, and store the electronic mail corresponding to the bit-map data in the DPPC mail box. The user can naturally transmit the data in the form of an electronic mail to another external apparatus connected to the LAN by inputting the mail address of the mail box of the external apparatus from the facsimile operation unit 170. That is, image data of an original image read by the scanner block of the DPPC 2 and FAX data received by the communication controller 152 of the DPPC 2 can be transmitted in the form of electronic mails not only to the DPPC mail box but also to mail boxes of other external apparatuses and stored in the memory M of the mail server 310.

As shown in FIG. 5, the communication controller 152 has a FAX processor 201, a network communication unit 202, an electronic mail processor 203, an mail separating/forming unit 204, a FAX data developing unit 205, and a transfer processing controller 206.

The transfer processing controller 206 controls the entire communication controller 152. As described above with reference to FIG. 4, the FAX processor 201 is connected to the general public line and can receive FAX data transmitted from the outside to the DPPC 2. It is of course possible to transmit FAX data to the outside via the FAX processor 201.

When a FAX is received while a normal copy mode is set by the user via the control panel block 110, i.e., while the DPPC 2 is free without being set to any of a facsimile apparatus, a copier, and a printer, the transfer processing controller 206 transmits the FAX data received by the FAX processor 201 to the FAX data developing unit 205. The FAX data developing unit 205 develops the transmitted FAX data into printable image data and outputs the data to the printer block 130. The printer block 130 outputs an image corresponding to the FAX data onto a paper sheet.

If the printer block 130 is unusable because it is already in operation or has failed, the transfer processing controller 206 automatically switches the operation mode to an automatic reception mode. In this automatic reception mode, memory reception processing is executed. That is, in this memory reception processing the FAX data received by the FAX processor 201 is transferred to the data storage device 145 and stored in it. To inform the user that the FAX is automatically received, the FAX processor 201 transmits reception information to the transfer processing controller 206. The reception information is transmitted from the transfer processing controller 206 to the control panel block 110 and displayed on the mail display 175 of the control panel block 110.

When the printer block 130 becomes usable, the FAX data stored in the data storage device 145 is transmitted to the FAX data developing unit 205 and developed into printable image data, and the image data is output to the printer block 130.

The capacity of the data storage device 145 is managed by the memory management controller 147. If a new FAX is received when it is determined on the basis of the management data from the memory management controller 147 that the capacity of the data storage device 145 has reached or almost reached the allowable capacity or the device 145 is unusable due to a failure or the like cause, the transfer processing controller 206 switches the automatic reception mode to an automatic FAX transfer mode.

It is also of course possible to set this automatic FAX transfer mode by the user by using the automatic transfer button 171 of the facsimile operation unit 170 shown in FIG. 3. Whether the mode is set is determined by the user when, for example, the printer block is unusable due to a failure or the like.

When the automatic FAX transfer mode is set, the FAX data received by the FAX processor 201 is transmitted to the mail separating/forming unit 204. Alternatively, the FAX data temporarily stored in the data storage device 145 can be transmitted to the mail separating/forming unit 204.

The transfer processing controller 206 instructs the mail separating/forming unit 204 to form an electronic mail. That is, the FAX data stored in the data storage device 145 or the FAX data transmitted from the FAX processor 201 is converted into an electronic mail for transfer by the mail separating/ forming unit 204 by adding the FAX data to the mail, without changing its format, as an appended file.

The transfer electronic mail formed by the mail separating/forming unit 204 is transmitted to the electronic mail processor 203.

The electronic mail processor 203 is connected to the LAN via the network communication unit 202 and can transmit and receive electronic mails. That is, the electronic mail processor 203 has a function as a mail client of the mail server 310 on the LAN as shown in FIG. 4 and can transmit the transfer electronic mail formed by the mail separating/forming unit 204 to the DPPC mail box in the mail server 310 on the LAN. Also, the electronic mail processor 203 transmits reception information of received mails stored in the DPPC mail box of the mail server 310 to the transfer processing controller 206. The transfer processing controller 206 so controls the control panel block 110 as to display the reception information transmitted from the electronic mail processor 203.

That is, since the DPPC mail box is set in the memory M of the mail server 310, the mail server 310 temporarily stores electronic mails transmitted from the DPPC 2. When operated by the user from the control panel at a later time, the DPPC 2 can retrieve the stored electronic mails from the mail server 310 as electronic mails transmitted to the DPPC.

By depressing the received mail display button 176A of the mail operation unit 176, the user can make the mail display 175 display the electronic mails stored in the DPPC mail box of the mail server 310. The user can search the electronic mails stored in the DPPC mail box by using the search buttons 176B and 176C. By depressing the print button 176D, the user can read out a necessary mail from the mail box and make the electronic mail processor 203 receive the readout mail via the network communication unit 202.

The electronic mail received from the mail box to the DPPC is automatically deleted from the mail box.

When an external apparatus other than the DPPC 2, e.g., a computer connected to the LAN accesses the DPPC mail box and reads out an electronic mail, the electronic mail can be either deleted or kept stored on the basis of an instruction from the computer.

The electronic mail thus retrieved or received is received by the electronic mail processor 203 and transmitted to the mail separating/forming unit 204. The mail separating/forming unit 204 separates the FAX data added as an appended file to the electronic mail. The FAX data is transmitted to the FAX data developing unit 205 and developed into printable image data, and the image data is output to the printer block 130.

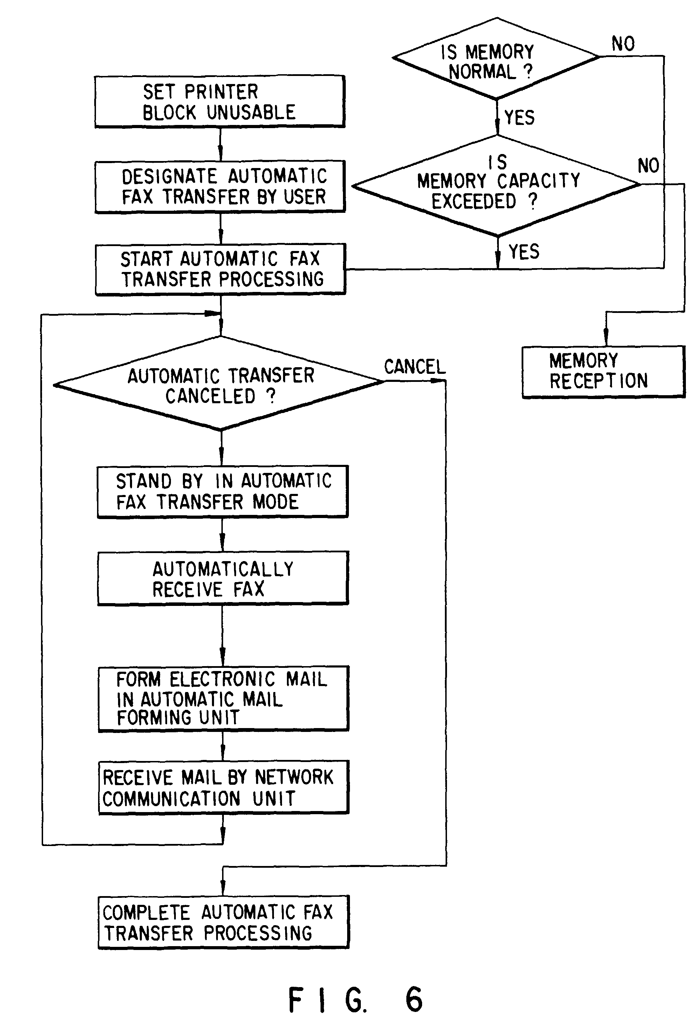

Processing in the automatic FAX transfer mode will be described below with reference to the flow chart in FIG. 6.

If the printer block 130 of the DPPC 2 becomes unusable due to a failure or an error such as lack of toner, the user turns on the automatic FAX transfer button 171 of the control panel block 110 to switch the operation mode of the DPPC 2 to the automatic FAX transfer mode.

Meanwhile, the memory management controller 147 checks the state of the data storage device 145, i.e., checks whether the data storage device 145 is normal as a memory and the capacity of the data storage device 145 has exceeded the allowable capacity. If the controller 147 determines that the data storage device 145 is abnormal or that the capacity has reached or almost reached the allowable capacity even though the data storage device 145 is normal, the operation mode is automatically switched to the automatic FAX transfer mode regardless of the operation by the user. Also, if a FAX is received when the data storage device 145 is normal and has an enough capacity, memory reception is performed in the automatic reception mode. That is, the FAX data is temporarily stored in the data storage device 145.

When the automatic FAX transfer mode is set, automatic FAX transfer processing is started. That is, when the transfer processing controller 206 detects that the automatic FAX transfer mode is set, the controller 206 makes the FAX processor 201 stand by in an automatic reception state.

When FAX data is transmitted to the DPPC 2 via the general public line, the FAX processor 201 automatically receives the FAX data.

The FAX processor 201 informs the transfer processing controller 206 of the reception of the FAX data. On the basis of this reception information, the transfer processing controller 206 makes the control panel block 110 display the reception information.

Upon receiving the FAX reception information, the transfer processing controller 206 instructs the mail separating/forming unit 204 to form an electronic mail. That is, on the basis of the instruction from the transfer processing controller 206, the mail separating/forming unit 204 converts the FAX data received by the FAX processor 201 into an electronic mail for transfer by adding the FAX data as an appended file to the mail.

The transfer electronic mail thus formed is transmitted to the electronic mail processor 203. The electronic mail processor 203 transmits the transfer electronic mail to the mail box previously set by the user, i.e., the DPPC mail box of the mail server 301 via the network communication unit 202.

Through the above processing steps, the FAX data automatically received by the DPPC 2 is automatically transferred as an electronic mail to the mail box at the previously set mail address and stored in the memory M of the mail server 310 having the mail box.

When the printer block 130 becomes usable, the user can cancel the automatic FAX transfer mode by using the control panel block 110. When automatic transfer is canceled by the automatic FAX transfer button 171, the transfer processing controller 206 instructs the FAX processor 201 to end the automatic FAX transfer mode, and the automatic transfer processing ends.

The electronic mail including the automatically transferred FAX data can be retrieved when the electronic mail processor 203 having a client function of the electronic mail system constructed on the LAN retrieves received mails transmitted to the mail address designated as the destination of automatic transfer.

That is, as already described above, the mail display 175 of the control panel block 110 displays a list of received mails, and the user can retrieve a desired received mail by operating the operation unit 176. When the user designates a desired received mail by using the operation unit 176, the transfer processing controller 206 instructs the electronic mail processor 203 to retrieve the received mail at the designated mail address from the mail server. The mail separating/forming unit 204 separates the FAX data added as an appended file from the electronic mail and transmits the FAX data to the FAX data developing unit 205.

The FAX data developing unit 205 develops the FAX data into printable image data and outputs the data to the printer block 130.

In the automatic FAX transfer mode as described above, automatically received FAX data is stored in the form of an electronic mail in the mail server as an external data storage device via the LAN. This solves the problem that the data storage device of the DPPC exceeds the allowable capacity to make subsequent FAX reception impossible. Consequently, even if the printer block of the DPPC ceases to function for long time periods, the FAX receiving function can be well maintained without increasing the capacity of the data storage device. This allows stable FAX reception. Also, even if the data storage device exceeds its allowable capacity and becomes unusable, automatically received FAX data can be reliably stored in the mail server as an external data storage device. Accordingly, FAX data can be reliably received without making reception impossible.

Additionally, FAX data is transferred in the form of an electronic mail. Therefore, the existing mail server can be easily used as an external data storage device only by connecting the DPPC to the existing network corresponding to the electronic mail system.

Furthermore, by setting the address of an electronic mail to be transmitted to the mail box of the DPPC as the transmission source, the received mail can be retrieved from that DPPC. After the printer block is recovered, therefore, the FAX data transferred to the mail server can be retrieved in the form of an electronic mail and output as an image.

## Claims

1. An image forming system comprising an external data storage device (310), an image forming apparatus (2), and connecting means (250) for connecting said image forming apparatus and said data storage device so that image data can be transmitted and received therebetween,
characterized in that said image forming apparatus comprises:
receiving means (201) for receiving image data transmitted from an external apparatus;
storage means (145) for storing the image data received by said receiving means;
image forming means (6) for forming an image on a recording medium on the basis of the image data stored in said storage means; and
image data transfer means (152) for transferring the image data received by said receiving means to said external data storage device via said connecting means in order to allow said external data storage device to store the image data, if the image data cannot be stored in said storage means.

2. A system according to claim 1, characterized in that said image forming apparatus comprises mode setting means (171, 172) for instructing said image data transfer means to set a data transfer mode characterized in that the image data received by said receiving means is transferred to said external data storage device.

3. A system according to claim 2, characterized in that said image data transfer means comprises managing means (147) for managing said storage means and outputting management information of said data storage means, determining means (206) for determining on the basis of the output management information from said managing means whether image data can be stored in said storage means, and control means (206) for setting the data transfer mode when said determining means determines that image data cannot be stored in said storage means, even if said mode setting means does not set the data transfer mode.

4. A system according to claim 1, characterized in that said image forming apparatus comprises designating means (173, 174) for designating a transfer destination to which said image data transfer means transfers image data.

5. A system according to claim 4, characterized in that said external data storage device comprises a plurality of data storage areas (M), and at least one of said data storage areas corresponds to a data storage area as the transfer destination designated by said designating means of said image forming apparatus and stores image data transferred from said image forming means.

6. A system according to claim 5, characterized in that said image forming apparatus comprises retrieving means (110, 203, 206) for retrieving the image data, which is transferred from said image data transfer means and stored in said data storage area of said external data storage device, from said external data storage device via said connecting means, and supply means (204, 205) for supplying the image data retrieved by said retrieving means to said image forming means.

7. A system according to claim 5, characterized in that said image forming apparatus comprises searching means (175, 176) for searching a plurality of image data stored in said data storage area of said external data storage device for desired image data.

8. A system according to claim 1, characterized in that said image data transfer means comprises mail converting means (204) for converting image data received by said receiving means into a form of an electronic mail in order to allow said external data storage device to store the image data, and mail transmitting means (203) for transmitting the electronic mail converted by said mail converting means to said external data storage device via said connecting means.

9. A system according to claim 8, characterized in that said image forming apparatus comprises mode setting means (171, 172) for instructing said image data transfer means to set a mail transfer mode characterized in that image data received by said receiving means is transferred in a form of an electronic mail to said external data storage device.

10. A system according to claim 9, characterized in that said image data transfer means comprises managing means (147) for managing said storage means and outputting management information of said data storage means, determining means (206) for determining on the basis of the output management information from said managing means whether image data can be stored in said storage means, and control means (206) for setting the mail transfer mode when said determining means determines that image data cannot be stored in said storage means, even if said mode setting means does not set the mail transfer mode.

11. A system according to claim 10, characterized in that said image forming apparatus comprises address designating means (173, 174) for designating an address to which the electronic mail converted by said mail converting means of said image data transfer means is transferred.

12. A system according to claim 11, characterized in that said external data storage device comprises a plurality of mail boxes, and at least one of said mail boxes corresponds to the address designated by said address designating means of said image forming apparatus and stores the electronic mail transferred from said mail transmitting means.

13. A system according to claim 12, characterized in that said image forming apparatus comprises mail retrieving means (110, 203, 206) for retrieving the electronic mail, which is transferred from said image data transfer means and stored in said mail box of said external data storage device, from said external data storage device via said connecting means, reconstructing means (204) for reconstructing the electronic mail retrieved by said mail retrieving means into corresponding image data, and supply means (205) for supplying the image data reconstructing by said reconstructing means to said image forming means.

14. A system according to claim 12, characterized in that said image forming apparatus comprises mail searching means (175, 176) for searching a plurality of image data stored in said mail box of said external data storage device for desired image data.

15. An image forming apparatus comprising:
receiving means for receiving image data supplied from first external device;
storage means for storing the image data received by said receiving means;
image forming means for forming an image on a recording medium on the basis of the image data stored in said storage means; and
image data transfer means for transferring the image data to second external device when it is impossible for said storage means to store the image data supplied from the first external device.

16. An apparatus according to claim 15, characterized by further comprising instructing means for instructing said image data transfer means to transfer the image data stored in the second external device to said receiving means, and said receiving means has means for receiving the image data supplied from the second external device in accordance with instructions made by said instructing means.

17. An apparatus according to claim 15, characterized by further comprising mode setting means (171, 172) for setting a data transfer mode in said image data transfer means to cause said image data transfer means to transfer the image data received by said receiving means to the second external device.

18. An apparatus according to claim 17, characterized in that said image data transfer means comprises managing means (147) for managing said storage means and outputting management information of said storage means, determining means (206) for determining on the basis of the management information whether image data can be stored in said storage means, and control means (206) for setting the data transfer mode when said determining means determines that it is impossible for said storage means to store image data even if the data transfer mode is not set in said image data transfer means.

19. An apparatus according to claim 15, characterized by further comprising designating means (173, 174) for designating a transfer destination to which said image data transfer means is to transfer image data.

20. An apparatus according to claim 19, characterized in that the transfer destination corresponds to at least one of data storage areas (M) provided in the second external device, and the image data transferred from said image forming means is stored in said at least one of the data storage areas (M).

21. An apparatus according to claim 20, characterized by further comprising retrieving means (110, 203, 206) for retrieving from the second external device the image data transferred by said image data transfer means and stored in said at least one of data storage areas (M) provided in the second external device, and supply means (204, 205) for supplying to said image forming means the image data retrieved by said retrieving means.

22. An apparatus according to claim 20, characterized by further comprising retrieving means (175, 176) for retrieving at least a desired one of image data items stored in data storage areas (M) provided in the second external device.

23. An apparatus according to claim 15, characterized in that said image data transfer means comprises mail converting means (204) for converting image data received by said receiving means into an electronic mail, thereby to allow said second external device to store the image data, and mail transmitting means (203) for transmitting the electronic mail to said second external device.

24. An apparatus according to claim 23, characterized by further comprising mode setting means (171, 172) for setting a mail transfer mode in said image data transfer means to cause said image data transfer means to transfer the image data received by said receiving means to the second external device in the form of an electronic mail.

25. An apparatus according to claim 24, characterized in that said image data transfer means comprises managing means (147) for managing said storage means and outputting management information of said storage means, determining means (206) for determining on the basis of the management information whether image data can be stored in said storage means, and control means (206) for setting the mail transfer mode when said determining means determines that it is impossible for said storage means to store image data even if the mail transfer mode is not set in said image data transfer means.

26. An apparatus according to claim 25, characterized by further comprising address designating means (173, 174) for designating an address to which said data transfer means is to transfer the electronic mail.

27. An apparatus according to claim 26, characterized in that the address corresponds to at least one of mail boxes provided in the second external device, and the electronic mail transferred from said mail transmitting means is stored in said at least one of the mail boxes.

28. An apparatus according to claim 27, characterized by further comprising retrieving means (110, 203, 206) for retrieving from the second external device the electronic mail transferred by said image data transfer means and stored in said at least one of the mail boxes provided in the second external device, reconstructing means (204) for reconstructing the electronic mail retrieved by said mail retrieving means, thereby generating image data, and supply means (204, 205) for supplying to said image forming means the image data generated by said reconstructing means.

29. An apparatus according to claim 27, characterized by further comprising mail retrieving means (175, 176) for retrieving at least a desired one of image data items stored in the mail boxes provided in the second external device.
